# EUROPEAN PATENT APPLICATION

(11) **EP 4 242 768 A1**
(43) Date of publication of application: **13.09.2023**
(21) Application number: 23161179.9
(22) Date of filing: 10.03.2023
(51) Int. Cl.: G05B 23/02

(54) **SYSTEM AND METHOD FOR PREDICTION OF OPERATIONAL SAFETY OF METALLURGICAL VESSELS**

(30) Priority: 10.03.2022 US 202263318594 P
(71) Applicant: Paneratech, Inc., Chantilly, Virginia 20151 (US)
(72) Inventor: Bayram, Yakup, Chantilly (US)
(74) Representative: FRKelly

(57) **Abstract**

Disclosed is a system and a method for estimating a level of risk of operation of a metallurgical vessel (12) used in the formation of metals. The system and method are operative to determine a condition and level of degradation of the refractory material (14) of the vessel to early warn a user of the operational risk of continuing operating the vessel, based on thermal scanning and the use of artificial intelligence. The system is capable of determining the presence of certain flaws within the refractory material and the remaining thickness of such material by correlating the results of processing thermal data corresponding to the external surface of the vessel with a machine learning-based mathematical model, according to a set of operational parameters related to the melting process, data from the user, and residual thickness of the refractory material.

## Description

### FIELD OF THE INVENTION

The present invention relates to systems and methods for evaluating the status of a material. More particularly, the present invention relates to sensing systems and methods for estimating a safe operation condition of refractory-based vessels used in manufacturing.

### BACKGROUND OF THE INVENTION

A number of evaluation systems and methods have been disclosed within various industries for measuring the status of certain materials, using a variety of devices, including thermal imaging cameras, infrared detectors, and laser scanners. As an example, thermal imaging cameras have been used to map roofs and walls of houses and buildings to show locations of anomalies comprising trapped moisture, roof cracks or openings causing thermal or water leaks, and compromised insulation. These cameras rely on the fact that moisture, cracks, and compromised insulation modify the thermal mass of the roof or wall, which makes the roof or wall to hold onto heat in a different fashion as compared to that of the unaffected material surrounding these anomalies.

Metallurgical industries use vessels, such as furnaces and ladles, to melt, treat, refine, and transport the raw material used for processing. They are key assets for manufacturers in terms of costs and operational functionality. In order to minimize the internal heat loss at high operating temperatures, these furnaces and ladles are constructed using refractory material, having very high melting temperatures and good insulation properties, to create a refractory melting chamber. However, the inner refractory walls of a metallurgical vessel will degrade during operation. The effects of this degradation include refractory erosion, refractory corrosion, stress cracks, and refractory material diffusion into the molten material.

On the other hand, as the refractory material degrades over time, the molten material may accumulate on the degraded surface of or penetrate into the refractory material accelerating the degradation process and creating a higher risk for molten material leakage through the refractory wall with potentially devastating consequences. As a result, manufacturers may be misled and face an increased risk of experiencing either an unexpected leakage of molten material through the vessel wall or an increased uncertainty to conservatively shut down the vessel for re-build to reduce the likelihood of any potential leakage, based on the manufacturer's experience of the expected lifetime of the vessel.

In metallurgical vessels, the surface condition of internal and external walls, slag buildup, refractory material thickness and homogeneity, rate of erosion of the refractory material, and level and rate of penetration of molten material into the refractory material are some of the important aspects that may require monitoring and evaluation. The importance of these aspects relies on their role to provide useful information to estimate the remaining operational life of the vessel. Typically, collecting this information involves a plurality of sensors that may include one or a combination of more than one of an ultrasound unit, a laser scanner, a LIDAR device, an infrared camera, a stereovision camera, a radar, and a thermal scanning or imaging device to ultimately indicate whether the condition of the metallurgical vessel is suitable for operation.

Currently, most manufacturers use thermal scanning devices and visual inspections to monitor and assess the suitability of continuing operation of a metallurgical vessel. Laser scanning devices are also used by manufacturers to a lower extent due to their high cost as compared to thermal imaging systems. Laser scanning methods can provide refractory thickness, but they are not reliable to both determine the depth and size of cracks that may affect the refractory material of a vessel and estimate the penetration of molten material into the refractory material, due to the inherent slag buildup occurring in certain regions of the refractory material in contact with the molten material and the lack of resolution needed for detecting very fine cracks.

The advent of artificial intelligence in recent years has provided means to develop and use machine learning-based techniques in multiple fields. In particular, the combination of machine learning algorithms with a thermal imaging device and operational and process parameters of the metallurgical vessel may be helpful to predict a level of risk of operating the vessel. In other words, a system and a method can be used to provide an early warning as to how the refractory material of the vessel is deteriorating to establish a level of risk of operating the vessel.

Specifically, the use of artificial intelligence to process data or images have been addressed in the prior art, as described in U.S. Pat. No. 11,144,814 to Cha et al., for performing structure defect detection using computer implemented arrangements employing machine learning algorithms in the form of neural networks, and in U.S. Pat. No. 10,970,887 to Wang et al., which discloses tomographic and tomosynthetic image reconstruction systems and methods in the framework of machine learning, such as deep learning, wherein a machine learning algorithm can be used to obtain an improved tomographic image from raw data, processed data, or a preliminarily reconstructed intermediate image for biomedical imaging or any other imaging purpose. Likewise, an effort to develop systems, methods, and devices for training models or algorithms for classifying or detecting particles or materials in microscopy images have been described in U.S. Pat. No. 10,255,693 by Richard B. Smith. However, these systems and methods are primarily aimed to process data or images to correlate certain surface structural defects with surface image features, to obtain or improve images, or to classify images.

Additional attempts have been made to predict a future status of a refractory lining that is lined over an inner surface of an outer wall of a metallurgical vessel, as described in U.S. Pat. No. 10,859,316 to Richter et al. However, this approach is constrained to collecting multiple laser scans of the interior of the vessel prior to and after each heat of the vessel, while the vessel is empty (not processing molten material), to determine an exposure impact of the heat on the refractory lining by comparing the collected pre-heat structural condition data with the collected post-heat structural condition data.

In addition, there are other limitations and challenges faced by this attempt. Firstly, there is a lack of practicality because laser scanning involves a lengthy process and most of the time operators do not perform laser scans prior to and after each heat. Secondly, the predictability of the refractory material condition is ineffective since determination of the exposure impact is based only on comparing laser scans prior to and after each heat without considering all the heats in which the refractory material under evaluation has been involved. Thirdly, laser scanning technology is insufficient to determine the presence, depth, and size of cracks, which are not only a significant source for potential refractory failure, but also are typically found in and progressively grow throughout the operational lifetime of the refractory lining. Thus, a penetration of molten material into the refractory material cannot be detected by a laser scanner. Moreover, the referenced attempt addresses the prediction of the future status of the refractory lining after one or more subsequent heats based on the determined exposure impact of the heat, while remaining silent about the calculation of the level of risk of operating the vessel, particularly while the vessel is processing molten material, or the use of artificial intelligence-based models or algorithms.

Likewise, in U.S. Pat. No. 10,935,320 to Lammer et al., a method is described for determining the state of a refractory lining of a metallurgical vessel containing molten metal. In addition, although the method disclosed in this patent comprises generating a mathematical model that provides an indication of wear of the refractory lining based on at least a portion of three sets of data, these data neither require the measured temperatures of the external surface of the vessel during the processing of molten material nor the mathematical model or the method disclosed correlates these measured temperatures with a calculation of the level of risk of operating the vessel, especially while the vessel is processing molten material.

Particularly in steel metallurgy either a basic oxygen furnace or an electric arc furnace is commonly used for high-speed melting of the steel and carrying out metallurgical reactions to adjust the final chemical composition of the steel. Later, molten steel is transported to a ladle for further refining, which includes the addition of deoxidizers, slag formers, desulfurizers, and alloying agents. These additives along with the high temperatures at which the ladle operates accelerate and contribute to a severe corrosion, wear, and degradation of the internal sidewalls and the bottom of the ladle, both of which are in contact with the molten material during the ladle operation. In particular, electric-arc furnaces, with a capacity of 50 tons or more, and ladles are largely used to produce steel. These ladles need to be maintained for removal of residues and inspection, and sometimes repaired as often as on a weekly basis.

Moreover, the flow of molten material, such as molten steel, at high temperatures erodes and degrades the inner surface of the refractory material and creates a high risk for molten steel leakage through the refractory wall or a severe damage to the outer shell of the vessel. Furthermore, a leak of molten steel may cause significant damage to the equipment around the vessel and, most importantly, put at risk the health and life of workers. For these reasons, in most cases vessel relining is conducted at a substantially earlier time than needed. This leads to significant costs for manufacturers in terms of their initial investment and the reduced production capacity over the operational life of the vessel.

Thus, it is critical for metallurgical vessel operators to efficiently plan maintenance and monitor refractory material degradation of the vessel walls to extend the operational life of the vessel and plan required outages of the vessel when it is really necessary. The lifetime and operational capability of a ladle or furnace, as a result of the degradation of refractory material, might be affected by a number of factors, including the operational age, the average temperature of operation, the heating and cooling temperature rates, the range of temperatures of operation, the number of cycles of operation, the type and quality of the refractory material, the slag buildup on the inner refractory walls as well as the load and type of the molten material and additives in contact with the refractory material. Each of these factors is subject to uncertainties that make it difficult to create accurate estimates of the expected lifetime of a furnace and when to perform the corresponding maintenance tasks.

As a consequence of the foregoing there is a need to replace the lining after 30 to 100 heats or in some instances, even sooner when refractory wear accelerates. It is not unusual for a metallurgical vessel to be shut down for maintenance multiple times a year. Further, each shut down can last up to several days, translating into a negative impact on the operational life of the vessel. On the other hand, a typical ladle may comprise a six-inch refractory layer in certain areas, and manufacturers look to operationally use the ladle until the refractory thickness is reduced to about one to two inches.

In particular, prediction of the level of risk associated to the operation of a vessel is crucial to industries where asset uptime is critical and asset downtime must be maintained to a minimum, while operating safely. Accurate operational risk prediction will enable manufacturers to minimize repairs and maximize the asset uptime. Current methods and techniques for measuring refractory thickness and slag buildup in metallurgical vessels, including ladles and electric arc furnaces, are primarily based on visual observations, laser scanning, thermal scanning, infrared, stereovision, radar, or acoustic technologies.

Currently manufacturers use infrared scans of the external surface of a vessel as an alarm monitor. Once the measured temperature exceeds a predefined threshold, typically on the order of 700°F, an alarm is automatically triggered, and the vessel is taken out of service. However, for a vessel in which molten metal has penetrated through cracks into the refractory material, this alarm might be triggered too late because during an actual operation of the vessel using a more corrosive process may cause a major leak of the vessel before the operator has a chance to catch the leak.

Therefore, there is a need, which is fulfilled by the present invention, not only to monitor the temperatures of the external surface of the vessel, but also to capture cracks, identified either visually or by means of a second sensor, and along with a set of operational and process parameters determine a compromised safety of the vessel well in advance of a possible leakage of molten material. This provides the ability to early warn vessel operators about molten material penetration into the refractory material before this penetration is observed using infrared scans. As a result, vessel operators will have ample time to properly plan for maintenance and more safely operate the vessel. In particular, as the refractory material gets thinner, the likelihood of a leakage of molten material gets higher. Therefore, refractory risk assessment becomes extremely critical towards the end of the campaign of the vessel.

Additionally, when using a thermal scanning device, the measured temperatures over a region of interest of the external surface of a vessel with a flawless refractory material and a flawless outer shell can be associated to a pattern of "normal temperatures" within a predefined range of values. This pattern of normal temperatures can be used as a benchmark for the optimal operating condition of the vessel corresponding to a set of operational parameters, the characteristics of the refractory material and molten material being processed, and the type of vessel used.

Over time, certain flaws may appear in the refractory material or the outer shell of the vessel. These flaws may include or may be due to cracks, erosion of materials, thickness variations, defects, and slag buildup. As a result of these flaws, the pattern of measured temperatures deviates from the pattern of normal temperatures. Accordingly, manufacturers set up a safety margin of temperature deviations from the pattern of normal temperatures to safely operate the vessel. Normally, once at least one of the measured temperatures over the region of interest of the external surface of the vessel exceeds the predefined safety margin, the operation of the vessel is stopped until the appropriate maintenance or repair of the vessel is performed.

The problem is that there is no early warning or an indication of the rate of degradation of the refractory material or outer shell of the vessel to alert the user of the risk of operating the vessel. Therefore, these mostly used systems provide only a binary "safe" or "not safe" indication to operate the vessel, which may significantly affect the operational and maintenance schedules of the vessel.

Currently, there is no well-established system or method that can deterministically estimate the level of risk of operating a metallurgical vessel using a thermal data scanner along or combined with operational or process data. The lack of such a system or method impairs the ability to operate the vessel with a higher safety confidence and to more accurately estimate both the remaining operational life and the maintenance plan of a vast number of furnaces and ladles. Thus, there remains a need for a system and method, based on the integration of at least one first sensor with at least one customized machine learning-based mathematical model and a data processing component, to calculate the level of risk of operating such vessel.

### SUMMARY OF THE INVENTION

A system and a method for estimating a level of risk of operation of a metallurgical vessel used in the formation of metals are disclosed herein. One or more aspects of exemplary embodiments provide advantages while avoiding disadvantages of the prior art. The system and method are operative to determine a condition and level of degradation of the refractory material of the vessel to early warn a user of the operational risk of continuing operating the vessel, based on thermal scanning and the use of artificial intelligence. The system is capable of determining the presence of certain flaws within the refractory material and the remaining thickness of such material by correlating the results of processing thermal data corresponding to the external surface of the vessel with a machine learning-based mathematical model, according to a set of operational parameters related to the melting process, data from the user, and residual thickness of the refractory material.

The system for estimating a level of risk of operation of a metallurgical vessel, such as a furnace or a ladle, comprises a plurality of subsystems. A thermal scanning subsystem to collect data for determining the temperature, of a region of interest, of the external surface of a metallurgical vessel to be evaluated, a machine learning-based mathematical model for such region of interest, and a data processing subsystem to manage the collected data and to use the machine learning-based mathematical model and additional operational and user's input parameters to correlate both the temperature of the external surface of the vessel and its variations with the level of risk of operating the vessel. The results of the evaluation of the vessel comprise one or more of a calculation of a qualitative or a quantitative level of risk of operating the vessel, a determination or estimation of the remaining thickness, the surface profile, or the rate of degradation over time of the refractory material of the vessel, an early warning to the user about the future operation of the vessel, or the remaining operational life of the vessel.

The thermal scanning subsystem comprises a first sensor, such as a thermal scanner, a thermal imaging camera, or an infrared camera for determining the temperature of the external surface of the metallurgical vessel, which can be used to collect and communicate temperature data corresponding to a specific region of the vessel. Preferably, the temperature data is mapped to have a representation of the temperature values over such region. In particular, within the context of the present invention, a vessel may include a furnace or a ladle, and the terms furnace or ladle are used indistinctively as the invention applies to either one or both.

The system further comprises a machine learning-based mathematical model for providing a range of temperatures of the external surface of the vessel over such region of interest correlated to a level of risk of operation of the vessel. This model is developed and trained using a dataset comprising data that include refractory material size, type, and chemical composition, vessel steel shell material type and size, operational parameters, status, and temperature of refractory and molten material, other user's inputs, ambient temperature surrounding the vessel, external surface temperatures associated to the heat and melting processes of a region of interest for a plurality of metallurgical vessels and molten materials, according to machine learning techniques.

The data processing subsystem comprises a main computer-based processor further comprising a data storage device and an executable computer code, configured to process the data collected by at least the first sensor; the input information, including the operational and process parameters, the remaining refractory material thickness, and the user's input; and to use the machine learning-based algorithm to compare the actual temperature measurements of the external surface of the vessel with the range of temperatures provided by the model, according to a set of operational parameters related to the melting process, data from the user, and prior thickness of the refractory material. The data processing subsystem may also be configured to process data or information from a plurality of sensors that may include one or a combination of more than one of an ultrasound unit, a laser scanner, a LIDAR device, a stereovision camera, a fiber optic-based device, and a radar.

Accordingly, the system can calculate the level of risk of operating the vessel, based on the deviations of the measured values of temperatures of the external surface of the vessel from the values provided by the machine learning-based mathematical model. Additionally, the data processing subsystem may be configured to process the values of temperatures of the external surface of the vessel, according to a plurality of residual thicknesses over the region of the material under evaluation and for multiple operational cycles of the vessel, to assess the variability of these temperatures and calculate the level of risk of operating the vessel. As a result, the system may determine the presence of certain flaws within the refractory material and the remaining thickness of such material to early warn a user of the operational risk of operating the vessel. This information may be further processed to estimate the remaining operational life and improve the maintenance plan of the vessel under evaluation.

In the present invention, the first sensor is preferably disposed not in physical contact with the metallurgical vessel. However, any of the various types of sensors that may be used to collect information prior, during, or after operation of the vessel may be disposed not in physical contact with, embedded in the refractory material of, or in physical contact with the vessel, according to the type of sensor used. Particularly, the first sensor may comprise a mesh or grid formed by a plurality of sections of optical fiber laid out on or around the external surface of the vessel, such that the first sensor is able to map the temperatures of the external surface of the vessel. In addition, different attachment mechanisms might be incorporated with any of these sensors to physically position the sensor inside or outside the vessel's chamber at one or more locations.

The method for calculating a level of risk of operating a metallurgical vessel and estimating the remaining operational life of such vessel involves the steps of collecting data, including size, type, chemical composition, operational parameters, status, and temperature of refractory and molten material, user's input, and external surface temperatures, associated to the heat and melting processes, of a region of interest for a plurality of metallurgical vessels and molten materials as well as creating a machine learning-based mathematical model to correlate an operational condition of the vessel's refractory material, the external surface temperatures of the vessel, the type of molten material, and the corresponding operational parameters, as previously noted, for the given region of interest.

The method further includes the step of determining a distribution of temperature ranges of the external surface of the region of interest associated to a level of risk of operation of a specific vessel according to the machine learning-based mathematical model in a certain region of interest. The method also includes the steps of measuring the external surface temperatures of the specific vessel over such region of interest, comparing these measurements with the distribution of temperature ranges of the external surface of the specific vessel, and calculating the risk of operation of the vessel, according to the difference between the measured temperatures and the modeled distribution of temperature ranges. The method further includes processing the data collected, determined, measured, or calculated to analyze, forecast, and provide information useful to estimate the remaining operational life and improve the maintenance plan of the vessel under evaluation.

By integrating at least a thermal scanning subsystem with customized computer processing tools, such as customized machine learning algorithms and a computer-based processor, the system and method are able to calculate the risk of operating the vessel and to determine the presence of certain flaws and the remaining thickness of the refractory material of a vessel. This translates into more effective and accurate scheduling to better manage the costly processes of metallurgical vessel repairs, decommissioning, or replacement along with a significant reduction of the level of risk of an operational break or leakage of molten material or severe damage to the vessel metal outer shell. Thus, the system and method allow a more effective operational assessment of metallurgical vessels, which may translate into a reduction of operational uncertainty and safer operations along with a potential extent of the operational life and an improved maintenance scheduling of such costly assets.

### BRIEF DESCRIPTION OF THE DRAWINGS

The numerous advantages of the present invention may be better understood by those skilled in the art by reference to the accompanying drawings in which:
Figure 1 shows a schematic view of an exemplary embodiment of a system for calculating the level of risk of operating a metallurgical vessel.
Figure 2 shows a schematic view of a method for calculating the level of risk of operating a metallurgical vessel.

### DETAILED DESCRIPTION OF THE INVENTION

The following description is of particular embodiments of the invention, set out to enable one to practice an implementation of the invention, and is not intended to limit the preferred embodiment, but to serve as a particular example thereof. Those skilled in the art should appreciate that they may readily use the conception and specific embodiments disclosed as a basis for modifying or designing other methods and systems for carrying out the same purposes of the present invention. Those skilled in the art should also realize that such equivalent assemblies do not depart from the scope of the invention in its broadest form.

The system for estimating a level of risk of operation of a metallurgical vessel integrates a plurality of subsystems, comprising a thermal scanning subsystem to collect data for determining the temperature, of a region of interest, of the external surface of a metallurgical vessel to be evaluated; a machine learning-based mathematical model for such region of interest; and a data processing subsystem to manage the collected data and to use the machine learning-based mathematical model and additional operational and user's input parameters to correlate both the temperature of the external surface of the vessel and its variations with the level of risk of operating the vessel.

In addition, the results of using the system and method for evaluating a metallurgical vessel may comprise one or more of a calculation of a qualitative or a quantitative level of risk of operating the vessel; a determination or estimation of the remaining thickness, the surface profile, or the rate of degradation over time of the refractory material of the vessel; an early warning to the user about the future operation of the vessel; the remaining operational life of the vessel; and an improved maintenance plan of the vessel.

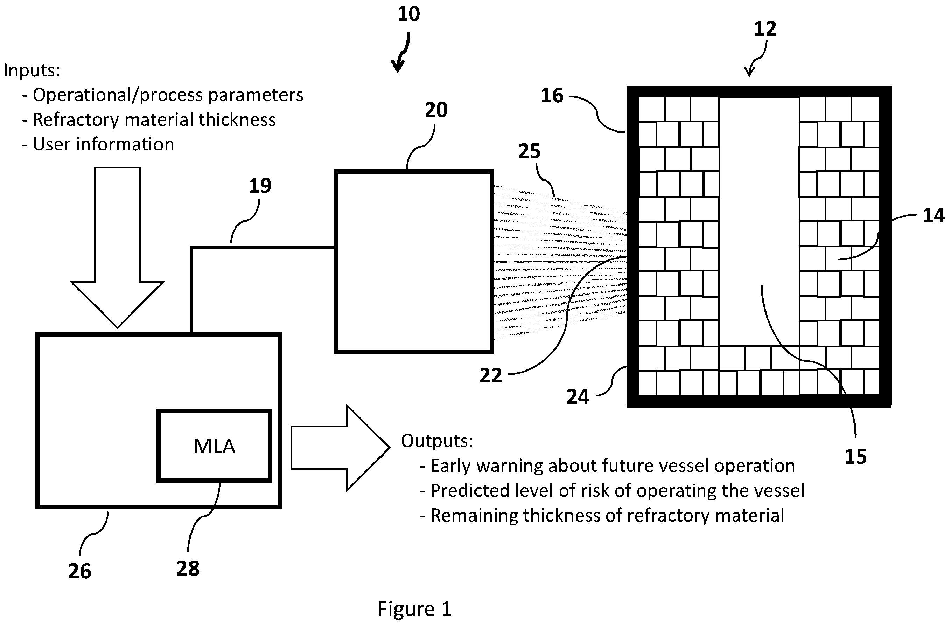

In accordance with certain aspects of an embodiment of the invention, Figure 1 shows a schematic view of an exemplary embodiment of a system 10 for estimating a level of risk of operation of a metallurgical vessel 12. Usually, vessel 12 comprises a plurality of layers of a refractory material 14. Typically, the various layers of refractory material 14 are formed using bricks disposed side-by-side from the bottom to the top of vessel 12. In other words, refractory material 14 is disposed in one or more layers between a chamber 15, wherein melting of a material, such as steel, takes place during operation of the vessel, and the external bottom and external side walls of vessel 12.

Accordingly, refractory material 14 forms one or more walls at least partly surrounding chamber 15 of vessel 12. Thus, refractory material 14 has an innermost surface, which might be contiguous to (i.e., in contact with) a molten material, such as steel, contained within chamber 15 during operation of vessel 12, and an outermost surface closer to the exterior region surrounding vessel 12. Typically, vessel 12 has an outer shell 24 surrounding refractory material 14. However, in certain applications, there might be no outer shell. As a result, an external surface 16 of vessel 12 may comprise either the outermost surface of refractory material 14 or at least part of outer shell 24. Usually, outer shell 24 of vessel 12 is made of steel, but those skilled in the art will realize that outer shell 24 may be made using other types of material and alloys.

In this particular configuration, a thermal scanning subsystem is used to collect data for determining the temperatures over a region of interest 22 of external surface 16 of vessel 12. The thermal scanning subsystem comprises at least one first sensor 20 able to detect the radiation emitted by an object in a band of the electromagnetic spectrum, including the infrared band, wherein the amount of emitted radiation can be correlated with the physical temperature of such object as is well-known in the prior art.

Specifically, first sensor 20 is properly positioned to detect a radiation 25 emitted by region 22 of external surface 16 of vessel 12. Preferably, first sensor 20 is a non-contact subsystem that allows collecting temperature data over region 22 of external surface 16 of vessel 12 at a distance from vessel 12. More preferably, first sensor 20 is part of a thermal data scanner configured to measure the temperatures over region 22. Most preferably, first sensor 20 is part of a thermal imaging system capable of mapping the values of the measured temperatures over region 22 by converting these values into a range of tonalities to form an image.

Importantly, the measured temperatures over region 22 of external surface 16 of vessel 12 might be representative of a condition of refractory material 14. In particular, certain flaws, including cracks and voids, the presence of molten material inside of refractory material 14, slag buildup on the inner wall of refractory material 14, or a degradation of refractory material 14 may translate into a variation of measured temperature values over region 22, as compared to a set of reference temperature values. Thus, by measuring the temperatures over region 22 and computing the difference of the measured values with reference values, it might be possible to identify a degradation of the operational condition of vessel 12.

System 10 further comprises a data processing subsystem 26 to manage input data associated to operational or process data of vessel 12, additional input parameters provided by a user or historical data, and the data collected by first sensor 20 to calculate the level of risk of operating vessel 12. In addition, system 10 further comprises a machine learning-based mathematical model 28, which is preferably integrated with data processing subsystem 26.

During normal operation of system 10, the temperature data collected by first sensor 20 is transferred to data processing subsystem 26 by means of a set of cables 19. In addition, set of cables 19 may be used to carry control, communications, and power signaling between first sensor 20 and data processing subsystem 26. Data processing subsystem 26 comprises a number of hardware components, such as a data storage device and a main computer-based processor, both of which can be integrated with first sensor 20 to process the data generated during the operation of system 10. The computer-based processor of data processing subsystem 26 is configured to operate machine learning-based mathematical model 28. In addition, data processing subsystem 26 is able to integrate and process a plurality of input data to allow system 10 to calculate the risk of operating vessel 12 and to determine the presence of certain flaws in and the remaining thickness of refractory material 14.

In this particular configuration, machine learning-based mathematical model 28 comprises a software architecture further comprising machine learning algorithms. Model 28 is configured to receive at least one input, consisting of data, and to generate at least one output. Preferably, model 28 is configured to receive as input at least three sets of data corresponding to multiple vessels, if possible, including various types, and one or more types, sizes, and chemical compositions of molten and refractory materials under a variety of operational and process conditions. These three sets of data include a first set of data containing user's input information, a second set of data comprising operational or process parameters, and a third set of data including the measured temperatures in at least one region of the external surface of the multiple vessels during their operation. More preferably, the collection of input data corresponds to a plurality of regions of these multiple vessels. The input data are used for training and validating one or more customized machine learning-based algorithms to create customized machine learning-based model 28.

The first set of data includes information typically inputted by a user into data processing subsystem 26. This user's input information may comprise the remaining thickness, rate of degradation, erosion profile of internal walls, type, quality, original and actual chemical composition, operational age, and number of cycles of operation of, presence of cracks in, and level of penetration of molten material into refractory material 14 before processing of molten material using vessel 12. Likewise, the first set of data may also include historical information related to the maintenance of refractory material 14, such as replacement or repair of a part of refractory material 14 including the type, amount, and location of additives or replaced parts applied to refractory material 14, and the physical design of refractory material 14. Particularly, the physical design of refractory material 14 may include the type, shape, size, dimensions, number of layers, and layout of the physical disposition of refractory material 14 as part of vessel 12. Importantly, the first set of data may further comprise any operational and process parameters, as disclosed below, used during a prior production of steel using vessel 12.

The second set of data comprises operational and process parameters such as type and properties, including amount, average and peak processing temperatures, heating and cooling temperature profiles, treatment times, and chemical composition, of the molten material being or to be processed using vessel 12; thickness and composition of the slag buildup in vessel 12; ambient temperature surrounding vessel 12; tapping times using vessel 12; how the molten material is or will be poured or tapped into or out of vessel 12; preheating temperature profile, while vessel 12 is empty; time during which the molten material is in contact with refractory material 14 (residence time); stirring time, level of pressure and flow rate of inert gas applied to vessel 12 during stirring; physical and chemical attributes and amounts of additives used or to be used in processing the molten material to produce a desired steel grade; and any other relevant operational parameter for production of steel using vessel 12. Those skilled in the art will realize that the additives used in steel processing may include charging mix components, alloys, slag formers, and flux chemicals.

The third set of data includes the measured temperatures over at least one region of the external surface of a plurality of metallurgical vessels during the processing of various molten materials. The information from these three sets of data provides the basis to create customized machine learning-based mathematical model 28 by correlating both the temperatures over region 22 of external surface 16 of vessel 12 and its variations from reference temperature values with the level of risk of operating vessel 12.

It is noted that at least a portion of the data in the first, second, and third sets of data may be obtained by measurements performed using a variety of measurement devices available in the marketplace or by using recorded information, as well known to one skilled in the art. Moreover, those skilled in the art will realize that any of the information pertaining to the first, second, and third sets of data may be inputted into data processing subsystem 26 by a user.

In a preferred configuration, customized machine learning-based model 28 is trained to correlate the input data to generate at least one output comprising a distribution of temperature ranges corresponding to the at least one region of the external surface of multiple vessels. After training is completed, model 28 is capable of generating an output, consisting of a distribution of temperature ranges over region 22 of external surface 16 of vessel 12, for a given input consisting of a specific first set of data and a specific second set of data, as noted above. Moreover, model 28 correlates this distribution of temperature ranges with the level of risk of operating vessel 12. Accordingly, for vessel 12 and specific first and second sets of data, data processing subsystem 26 is capable of calculating a level of risk of operating vessel 12 for a given temperature over region 22 of external surface 16 of vessel 12.

Furthermore, model 28 is also capable of determining an expected safe range of external surface temperatures over region 22 during operation of vessel 12 for a given set of operational and structural conditions of vessel 12. Therefore, by measuring the external surface temperatures over region 22 of external surface 16 during operation of vessel 12 and comparing these temperatures with the expected safe range of external surface temperatures, data processing subsystem 26 can not only determine whether the vessel is operating within a safe range of external surface temperatures, but also compute the difference between the measured temperatures and the temperatures at which operating vessel 12 is unsafe. Even further, based on the output of model 28, data processing subsystem 26 can calculate a level of risk of operating vessel 12 according to the difference between the measured temperatures and the temperatures at which operating the vessel is unsafe.

Preferably, the thickness of refractory material 14 prior to the processing of a molten material in vessel 12 is part of the specific first set of data or the specific second set of data used as input to data processing subsystem 26. Accordingly, by calculating the level of risk of operating vessel 12 after processing such molten material, data processing subsystem 26 is capable of determining the thickness of refractory material 14 and estimating the remaining operational life and the maintenance plan of vessel 12. Alternatively, based on the output of model 28, data processing subsystem 26 can estimate the remaining thickness of refractory material 14 from the thickness of refractory material 14 prior to the processing of a molten material in vessel 12 and factoring in the operational and process parameters used in the actual processing of such molten material in vessel 12, without the need of external temperature readings.

In general, those skilled in the art will realize how to create a mathematical model and will recognize that calculation methods exist for the assessment of refractory material 14 using operational information or empirical data to generate mathematical models. However, the possibilities for mathematically determining an effective level of risk of operating vessel 12 for the input data, as done by model 28 as described above, are not available in the prior art. As a result, typically the decisions regarding safety operation, remaining operational life, and maintenance of vessel 12 must be taken manually. In particular, prior art mathematical models lack the capability to effectively calculate the level of risk of operating vessel 12, based on the temperatures measured over region 22 of external surface 16 of vessel 12, while processing a molten material, for a given set of user's information, operational and process data, and conditions regarding vessel 12, as noted above.

Specifically, this invention discloses system 10, which comprises model 28, wherein model 28 is generated by correlating the specific data as mentioned above. In addition, model 28 is capable of warning users and providing safety margins of operation of vessel 12, according to the calculated level of risk of operating vessel 12, estimating the remaining operational life of vessel 12, and determining what and when to perform preventive and corrective maintenance actions, regarding vessel 12. More specifically, by correlating a specific set of input data to generate a customized machine learning-based model 28, as disclosed above, one skilled in the art at the time the invention was made would readily understand how to make and use the invention. Thus, customized machine learning-based mathematical model 28 may be implemented or programmed by those skilled in the art in view of the disclosure herein and their knowledge of artificial intelligence and mathematical models.

In particular, the output from data processing subsystem 26, as a result of assessing vessel 12 using model 28, comprises a qualitative assessment of the level of risk of operating vessel 12. As an example, this qualitative assessment may involve identifying the risk of operating vessel 12 as very high, high, medium, low, or very low, according to the measured temperatures over region 22 of external surface 16 of vessel 12. In addition, data processing subsystem 26 may provide an early warning to the user about the risk of operating vessel 12 as an alert notification or red flag signaling. Preferably, the output from data processing subsystem 26 comprises a quantitative assessment of the level of risk of operating vessel 12. As an example, this quantitative assessment may involve identifying the risk of operating vessel 12 as a probability or percentage of the potential failure of vessel 12 during processing a molten material.

More preferably, the output from data processing subsystem 26 further comprises a determination of the remaining thickness, the surface profile, or the rate of degradation over time of refractory material 14 of vessel 12 to estimate the remaining operational life and or an improved maintenance plan of vessel 12, including preventive or corrective maintenance of vessel 12. Moreover, data processing subsystem 26 may control the operation of first sensor 20. It is noted that the additional hardware components of data processing subsystem 26 have not been shown as these components are not critical to the explanation of this embodiment and the functions and configurations of these components are well-known in the prior art. Furthermore, in reference to Figure 1, those skilled in the art will realize that set of cables 19 may be replaced with a wireless system to couple first sensor 20 to data processing subsystem 26.

In an alternative embodiment, data processing subsystem 26 further comprises a customized artificial intelligence-based software. This software may comprise one or more customized machine learning-based algorithms developed to predict the degradation and wearing of the material under evaluation as well as to estimate the remaining operational life and to improve the maintenance plan of the vessel. In particular, the estimates of the thickness of a refractory material, using the first sensor at certain locations, operational parameters and observations, and previous knowledge of the thickness of the refractory material, provide a data set that can be used to train these algorithms. Once the customized algorithms are trained for each of the different zones of a predefined region of interest of vessel 12, their performance can be improved with additional estimations of the refractory thickness at different stages of the vessel's life. Alternatively, all the thickness estimation data of refractory material 14, collected over time, may be used for training or model-building of one or more of the specific artificial intelligence algorithms.

Furthermore, data processing subsystem 26 may also provide a status of refractory material 14 comprising a level or rate of degradation of such material due to various factors, including operational wear, age, and presence of flaws, cracks, corrosion, and erosion of refractory material 14. Accordingly, data processing subsystem 26 may enable system 10 to estimate the remaining thickness of refractory material 14, which is useful to estimate the remaining operational life and to improve the maintenance plan of vessel 12.

In addition, system 10 may further comprise a software subsystem configured to enable a user to control one or more computer-based processors for handling the collected data. This data handling includes measuring, storing, monitoring, recording, processing, mapping, visualizing, transferring, analyzing, tracking, and reporting of these data for calculating the risk of operating vessel 12 and to determine the presence of certain flaws and the remaining thickness of refractory material 14. Accordingly, an estimation of the overall health of vessel 12 might be obtained. In addition, a software subsystem might be configured to monitor and control the system operations not only locally, but also remotely through a computer network or a cloud computing environment.

Moreover, data processing subsystem 26 may further comprise data processing and image processing algorithms implemented by using one or a combination of more than one technique. These techniques may include Fourier transform, spectral analysis, frequency- and time-domain response analyses, digital filtering, convolution and correlation, decimation and interpolation, adaptive signal processing, waveform analysis, and data windows and phase unwrapping for data processing; and time domain, back projection, delay and sum, synthetic aperture radar imaging, back propagation, inverse scattering, and super-resolution, either with or without the application of differential imaging, for image processing. The signal processing technique may be selected according to a characteristic of the material under evaluation, such as thickness, number of layers, type, and dimensions of materials and the type of molten material to be processed.

In an alternative configuration, system 10 may further comprise at least one second sensor that can provide information as an input to data processing subsystem 26 to either improve machine learning-based mathematical model 28 to calculate the level of risk of operating vessel 12 or to estimate the remaining operational life and maintenance plan of vessel 12 once the level of risk of operating vessel 12 has been calculated. The information provided by the at least one second sensor may replace or complement one or more input data included as part of the first set of data or the second set of data typically used as input to data processing subsystem 26.

The second sensor may include one or a combination of more than one of an ultrasound unit, a laser scanner, a LIDAR device, a radar, and a stereovision camera. As an example, the information provided by the second sensor may include a surface profile of the internal walls of refractory material 14, obtained from measurements using a LIDAR or a laser scanning device. As another example, the second sensor may provide the thickness of refractory material 14, obtained from a radar or multiple measurements obtained from a LIDAR or a laser scanner. As an additional example, the second sensor may provide an estimate of the slag buildup on the internal walls of refractory material 14 obtained by using a radar.

The various embodiments have been described herein in an illustrative manner, and it is to be understood that the terminology used is intended to be in the nature of words of description rather than of limitation. Any embodiment herein disclosed may include one or more aspects of the other embodiments. The exemplary embodiments were described to explain some of the principles of the present invention so that others skilled in the art may practice the invention.

### Method

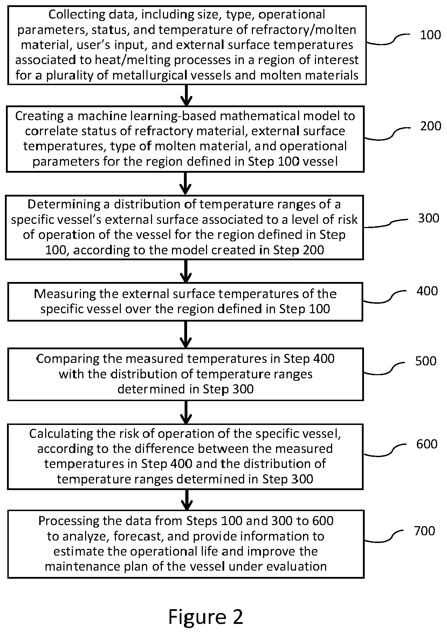

The method for calculating a level of risk of operating a metallurgical vessel and estimating the remaining operational life of such vessel is operative to combine a plurality of data with a machine learning-based mathematical model to estimate the operational condition of the vessel and provide information to estimate the remaining operational life and to improve the maintenance plan of the vessel. Figure 2 shows a schematic view of a method for calculating the level of risk of operating a metallurgical vessel. The information used may include data collected prior to, during, or after the operation of multiple vessels and regions of these vessels along with data related to a plurality of molten materials processed or to be processed. Then, a machine learning-based mathematical model is created to correlate these data and to determine a distribution of external temperature ranges of specific vessels according to a level of risk of operating the vessel under certain current or expected conditions and operational parameters. Finally, the comparison of actual temperature measurements of the external surface of a particular vessel during operation and the corresponding pre-determined distribution of the external surface temperature ranges determined by the model allows to calculate the risk of operation, estimate the remaining operational life, and improve the maintenance plan of the vessel, according to the following steps:
1. At step 100, collecting a plurality of data prior to, during, or after the operation of multiple metallurgical vessels in at least one region of these vessels along with data related to a plurality of molten materials. A first set of data may include information, including user's input data, available prior to the operation of the vessel, regarding the refractory material and the metallurgical vessel, such as size, type, and operational condition, including the thickness of and the presence, location, and characteristics of certain flaws, such as cracks, in the refractory material. A second set of data may comprise one or more operational or process parameters, including ambient temperature, of the vessel during the heating and melting processes for a specific molten material to be processed or under processing. A third set of data may entail the measured temperatures in at least one region of the external surface of the multiple vessels during their operation. Preferably, the collection of data corresponds to a plurality of regions of these multiple vessels for a variety of molten materials.
2. Next, at step 200, creating a machine learning-based mathematical model, using a customized machine learning-based algorithm, wherein such model is based on the data collected in Step 100, to correlate an operational condition of a refractory material, the type of molten material, the operational parameters, and the external surface temperatures of the vessel, corresponding to such at least one region of these vessels. Preferably, the model is created to characterize a plurality of regions of these multiple vessels for a variety of molten materials.
3. Next, at step 300, determining a distribution of temperature ranges corresponding to the external surface of a region of interest of a specific vessel associated to a level of risk of operation of such vessel, according to the machine learning-based mathematical model. By entering the information related to the first set of data and the second set of data, as described in Step 100 for a specific vessel, the model is used to determine an expected safe range of external surface temperatures of the vessel during operation and a level of risk of operating the vessel as a function of the external surface temperatures of the region of interest of the vessel during operation.
4. Next, at step 400, measuring the external surface temperatures of the region of interest of the specific vessel. Preferably, a thermal scanning device is used to measure the external surface temperature of the specific vessel.
5. Next, at step 500, comparing the measured external surface temperatures in Step 400 with the pre-determined distribution of temperature ranges in Step 300, corresponding to the region of interest of the specific vessel. Preferably, this comparison is performed by calculating a difference between the measured temperatures and the temperature ranges pre-determined by the model.
6. Next, at step 600, calculating the risk of operation of the specific vessel, according to the comparison of the measured external surface temperatures with the pre-determined distribution of temperature ranges, performed in Step 500, corresponding to the region of interest of the specific vessel. Preferably, the risk of operation of the specific vessel is calculated by the difference between the measured temperatures and the temperature ranges pre-determined by the model.
7. Last, at step 700, processing the data collected, determined, measured, or calculated at Step 100 and 300 to 600 to analyze, forecast, and provide information useful to estimate the remaining operational life and to improve the maintenance plan of the specific vessel. Preferably, at least one signal processing method is selected to process the data according to a characteristic of the refractory material of the vessel. More preferably, a second customized algorithm, based on artificial intelligence, is used to predict the degradation and wearing of the refractory material of the vessel as well as to estimate the remaining operational life and optimize the maintenance plan of the vessel. Most preferably, multiple evaluations over the remaining operational life of the vessel are performed to predict the degradation and wearing of the refractory material under evaluation more accurately to better estimate the remaining operational life and to improve the maintenance plan of the vessel.

In reference to Step 100 and Step 200 above, it is to be understood that these steps might need to be performed only during the initial set up of the machine learning-based mathematical model. Once the model has been created, a variety of specific vessels may be modeled and measured to calculate the risk of operating each of these specific vessels and provide information to estimate the remaining operational life and to improve the maintenance plan of the vessel. In other words, after steps 100 and 200 have been completed once, multiple assessments of a plurality of vessels may be performed staring at Step 300, with no need to go over steps 100 or 200 and without imposing any limitations or affecting the performance of the described method and the results obtained after applying such method.

Additionally, in reference to step 100 above, those skilled in the art would realize that a plurality of techniques and methods, based on a variety of sensors, including acoustic, radar, LIDAR, laser, infrared, thermal, and stereovision sensors, can be used to collect relevant data related to a metallurgical vessel. Those skilled in the art will also recognize that the steps above indicated can be correspondingly adjusted for a specific vessel and type of molten material, according to the specific machine learning-based algorithm used to create the machine learning-based mathematical model.

Once the risk of operating a specific vessel is calculated, and the remaining operational life and improvement of the maintenance plan of the vessel is estimated, the thickness and a level or rate of degradation of such material due to various factors, including operational wear, age, and presence of flaws, cracks, and erosion might also be estimated. In addition, multiple evaluations of the status of a material over time may be used to create trends to estimate such material degradation as well as forecast the remaining operational life and improve the maintenance plan of the vessel.

The present system and method for calculating the risk of operating a specific metallurgical vessel and provide information to estimate the remaining operational life and to improve the maintenance plan of the vessel have been disclosed herein in an illustrative manner, and it is to be understood that the terminology which has been used is intended to be in a descriptive rather than in a limiting nature. Those skilled in the art will recognize that many modifications and variations of the invention are possible in light of the above teachings. Obviously, many modifications and variations of the invention are possible in light of the above teachings. The present invention may be practiced otherwise than as specifically described within the scope of the appended claims and their legal equivalents.

## Claims

1. A system for calculating a risk of operation of a metallurgical vessel, wherein said metallurgical vessel comprises a refractory material having at least one internal wall and at least one external wall opposite said at least one internal wall, wherein said at least one internal wall of said refractory material of said vessel is exposed to a molten material different from said refractory material, said system comprising:
a. a thermal scanning subsystem comprising at least one first sensor to collect data for measuring a set of temperatures of a region of interest of an external surface of said vessel;
b. a customized machine learning-based algorithm; and
c. a data processing subsystem comprising a computer-based processor further comprising a data storage device and an executable computer code configured to process a first set of data inputted by a user, a second set of data comprising operational parameters related to a processing of said molten material, and a third set of data comprising said measured set of temperatures of said region of interest of said external surface of said vessel, and to operate said customized machine learning-based algorithm;
wherein said risk of operation of said vessel is calculated based on a correlation of said measured set of temperatures of said region of interest of said external surface of said vessel and a range of variations of said measured set of temperatures with a level of risk of operating one or more vessels, including said vessel, according to at least one output of said customized machine learning-based algorithm, and wherein said first set of data, said second set of data, and said third set of data are processed using said customized machine learning-based algorithm to create a customized machine learning-based mathematical model.

2. The system of claim 1, wherein said external surface of said vessel comprises an element selected from a group of said at least one external wall of said refractory material and a non-refractory material-based outer shell.

3. The system of claim 1, wherein said executable computer code operates said customized machine learning-based algorithm by providing one or more inputs to be used by said customized machine learning-based algorithm to create said machine learning-based mathematical model and by processing one or more outputs of said customized machine learning-based mathematical model.

4. The system of claim 1, wherein said first set of data comprises one or more elements selected from a group of a remaining thickness, a rate of degradation, an erosion profile of said at least one internal wall, a type, a quality, an original and an actual chemical composition, an operational age, and a number of cycles of operation of, a presence of one or more cracks in, and a level of penetration of said molten material into said refractory material before processing of said molten material using said vessel, a historical information related to a maintenance of said outer shell material including its audit reports, age, design and observed geometrical variations, a historical information related to a maintenance of said refractory material including a type, an amount, and a location of one or more additives and one or more replaced parts applied to said refractory material, a physical design of said refractory material, and one or more of said operational parameters, corresponding to a prior operation of said one or more vessels, including said vessel.

5. The system of claim 4, wherein said physical design of said refractory material comprises one or more elements selected from a group of said type, a shape, a dimension, a number of layers, and a layout of a physical disposition of said refractory material of said plurality of vessels.

6. The system of claim 1, wherein said second set of data comprises at least one element selected from a group of a remaining thickness of said refractory material prior to operating said vessel; an amount, an average and a peak processing temperature; a heating and a cooling temperature profile; a set of treatment times for said molten material being or to be processed using said vessel; a type and a chemical composition of said molten material being or to be processed using said vessel; a thickness and a composition of a slag buildup in said at least one internal wall of said refractory material of said vessel; an ambient temperature surrounding said vessel; a number of tapping times using said vessel; a pouring and a tapping method for said molten material to be poured and tapped into and out of said vessel; a preheating temperature profile while said vessel is empty; a time during which said molten material is in contact with said refractory material; a stirring time; intensity of stirring; a flow rate of inert gas applied to said vessel during stirring; an electric power applied; duration of electric power applied; duration of time between two tappings; a physical and a chemical set of attributes and amounts of one or more additives used or to be used in processing said molten material to produce a desired steel grade; and one or more relevant of said operational parameters for a production of steel using said at least one or more vessels, including said vessel.

7. The system of claim 1, wherein said third set of data includes said measured set of temperatures of said region of interest of said external surface of said at least one or more vessels, including said vessel.

8. The system of claim 1, wherein said customized machine learning-based model is created by determining a correlation of said first set of data and said second set of data with said third set of data for at least one element selected from a group of one or more types of said vessel, one or more types of said refractory material, and one or more types of said molten material.

9. The system of claim 1, wherein said data processing subsystem is configured to process said measured set of temperatures of said region of interest of said external surface of said vessel, corresponding to a plurality of residual thicknesses of said region of interest of said external surface of said vessel for one or more operational cycles of said vessel, to calculate said risk of operation of said vessel based on a variability of said temperatures over said region for said one or more operational cycles.

10. The system of claim 1, wherein said at least one first sensor comprises an element selected from a group of an infrared camera, a thermal scanner, a thermal imaging camera, and a mesh formed by one or more sections of optical fiber laid out in proximity to said external surface of said vessel.

11. The system of claim 1, further comprising at least one second sensor to collect information related to an element selected from a group of said first set of data and said second set of data.

12. The system of claim 10, wherein said at least one second sensor comprises an element selected from a group of an ultrasound unit, a laser scanner, a LIDAR device, a radar, and a stereovision camera.

13. The system of claim 12, wherein said second sensor comprises at least one laser scanner configured to perform one or more laser scans of a predefined area of said at least one internal wall of said refractory material while said vessel is empty.

14. The system of claim 13, wherein a first of said one or more laser scans is performed at a beginning of a campaign of said vessel, before a first operational cycle, and a second of said one or more laser scans is performed after a plurality of operational cycles of said vessel to calculate a remaining thickness of said refractory material.

15. The system of claim 11, wherein said at least one second sensor is disposed in a location selected from a group of being in physical contact with said refractory material, being at least partly embedded in said refractory material, and being at least partly embedded in at least one casted portion of said refractory material.

16. The system of claim 1, wherein said data processing subsystem is further configured to perform an action selected from a group of estimating a remaining operational life of said vessel and enhancing a maintenance plan of said vessel, after calculating said risk of operation of said metallurgical vessel.

17. The system of claim 16, wherein said data processing subsystem further comprises a second customized machine learning-based algorithm used to perform said action selected from said group of estimating said remaining operational life of said vessel and enhancing said maintenance plan of said vessel, after calculating said risk of operation of said metallurgical vessel.

18. A method for calculating a risk of operation of a metallurgical vessel, wherein said metallurgical vessel comprises a refractory material having at least one internal wall and at least one external wall opposite said at least one internal wall, wherein said at least one internal wall of said refractory material of said vessel is exposed to a molten material different from said refractory material, said system comprising:
a. providing a thermal scanning subsystem comprising at least one first sensor to collect data for measuring a set of temperatures of a region of interest of an external surface of said vessel; a customized machine learning-based algorithm; a data processing subsystem comprising a computer-based processor further comprising a data storage device and an executable computer code configured to process a first set of data inputted by a user, a second set of data comprising operational parameters related to a processing of said molten material, and a third set of data comprising said measured set of temperatures of said region of interest of said external surface of said vessel, and to operate said customized machine learning-based algorithm, wherein said risk of operation of said vessel is calculated based on a correlation of said measured set of temperatures of said region of interest of said external surface of said vessel and a range of variations of said measured set of temperatures with a level of risk of operating one or more vessels, including said vessel, according to at least one output of said customized machine learning-based algorithm,
b. collecting said first set of data, said second set of data, and said third set of data corresponding to said region of interest for said one or more vessels along with data related to one or more types of said refractory material and one or more types of said molten material;
c. creating a customized machine learning-based mathematical model, using said customized machine learning-based algorithm, wherein said customized machine learning-based model is created based on said first set of data, said second set of data, and said third set of data to correlate an operational condition of said refractory material, a type of said molten material, and at least a part of said operational parameters with said set of temperatures of said region of interest of said external surface of said refractory material and said range of variations of said set of temperatures for said one or more vessels, including said vessel;
d. determining a distribution of ranges of said set of temperatures corresponding to said region of interest of said external surface of said vessel associated to a level of said risk of operation of said vessel, according to said machine learning-based mathematical model, wherein said distribution of ranges provides an expected safe range of said external surface temperatures of said vessel during operation and said level of said risk of operating said vessel.

19. The method of claim 18, further comprising the steps of:
e. measuring said set of temperatures of said region of interest of said external surface of said vessel;
f. comparing said measured set of temperatures of said region of interest of said external surface of said vessel with said distribution of ranges of said set of temperatures corresponding to said region of interest of said external surface of said vessel; and
g. calculating said risk of operation of said vessel, according to said comparison of said measured set of temperatures of said region of interest of said external surface of said vessel with said distribution of ranges of said set of temperatures corresponding to said region of interest of said external surface of said vessel.

20. The method of claim 19, further comprising a step of processing at least one element selected from a group of said data and said temperatures collected, determined, measured, and calculated to analyze, forecast, and provide information to perform an action selected from a group of estimating a remaining operational life of said vessel and improving a maintenance plan of said vessel.

21. The method of claim 18, wherein said at least one first sensor comprises an element selected from a group of an infrared camera, a thermal scanner, a thermal imaging camera, and a mesh formed by one or more sections of optical fiber laid out in proximity to said external surface of said vessel

22. The method of claim 18, wherein said executable computer code is further configured to operate at least one signal processing method selected to process data according to a characteristic of said refractory material of said vessel.

23. The method of claim 18, wherein said second customized machine learning-based algorithm is used to predict a degradation and a wearing of said refractory material and to perform an action selected from a group of estimating a remaining operational life of said vessel and improving a maintenance plan of said vessel.

24. The method of claim 18, wherein a second sensor is used to collect at least a portion of an element selected from a group of said first set of data and said second set of data.

25. The method of claim 24, wherein said at least one second sensor comprises an element selected from a group of an ultrasound unit, a laser scanner, a LIDAR device, a radar, and a stereovision camera.

26. The method of claim 18, wherein said first set of data comprises one or more elements selected from a group of a remaining thickness, a rate of degradation, an erosion profile of said at least one internal wall, a type, a quality, an original and an actual chemical composition, an operational age, and a number of cycles of operation of, a presence of one or more cracks in, and a level of penetration of said molten material into said refractory material before processing of said molten material using said vessel, a historical information related to a maintenance of said outer shell material including its audit reports, age, design and observed geometrical variations, a historical information related to a maintenance of said refractory material including a type, an amount, and a location of one or more additives and one or more replaced parts applied to said refractory material, a physical design of said refractory material, and one or more of said operational parameters, corresponding to a prior operation of said one or more vessels, including said vessel; wherein said second set of data comprises at least one element selected from a group of a remaining thickness of said refractory material prior to operating said vessel; an amount, an average and a peak processing temperature; a heating and a cooling temperature profile; a set of treatment times for said molten material being or to be processed using said vessel; a type and a chemical composition of said molten material being or to be processed using said vessel; a thickness and a composition of a slag buildup in said at least one internal wall of said refractory material of said vessel; an ambient temperature surrounding said vessel; a number of tapping times using said vessel; a pouring and a tapping method for said molten material to be poured and tapped into and out of said vessel; a preheating temperature profile while said vessel is empty; a time during which said molten material is in contact with said refractory material; a stirring time; intensity of stirring; a flow rate of inert gas applied to said vessel during stirring; an electric power applied; duration of electric power applied; duration of time between two tappings; a physical and a chemical set of attributes and amounts of one or more additives used or to be used in processing said molten material to produce a desired steel grade; and one or more relevant of said operational parameters for a production of steel using said at least one or more vessels, including said vessel; and wherein said third set of data includes said measured set of temperatures of said region of interest of said external surface of said refractory material.
